# EUROPEAN PATENT APPLICATION

(11) **EP 1 959 447 A2**
(43) Date of publication of application: **20.08.2008**
(21) Application number: 08151284.0
(22) Date of filing: 11.02.2008
(51) Int. Cl.: G11B 20/00

(54) **Recording process**

(30) Priority: 15.02.2007 ES 200700402
(71) Applicant: Sonopress Ibermemory S.A,., 28820 Coslada (Madrid) (ES)
(72) Inventor: Chinarro Jimenez, Ángel, 28820 Madrid (ES); Alocen Martinez, José Juan, 28820 Madrid (ES)
(74) Representative: Elzaburu Marquez, Alberto

(57) **Abstract**

The invention relates to a recording process for recording data in a storage medium suitable for protecting against illegal copying which comprises recording data relating to a desired video on a storage medium such that a video object file (11) can be obtained, distributing the data stored in the video object file (11) in at least one cell (13), and adding at least one additional cell (12) to the cells (13) of stored data of the video object file (11) obtained such that the added cell (12) includes filler data.

## Description

### Object of the Invention

The present invention generally relates to a recording process for recording data in a magnetic storage medium and, more specifically, it relates to a recording process for recording data in a digital versatile disk, namely a DVD suitable for storing a wide variety of digital data types.

### State of the Art

It is known in the art that optical disks are used to store a great variety of unencrypted and/or encrypted digital data in order to try to protect against copying (CSS protection).

Among the most popular optical disk formats are compact disks and digital versatile disks, namely DVDs such as DVD-audio and DVD-video.

DVD disks are portable and can be used in a great variety of electronic equipment such as computers, DVD players, etc.

Data stored in a DVD disk are copied on the DVD generally by means of a copying process protecting the content thereof against illegally copying the stored data.

There are currently recording and/or illegal copying processes which can violate the anticopying processes included in the data stored in legally copied DVDs.

This fact has been favored by the spread and the price reduction of recorders and recordable storage mediums which have encouraged making illegal copies, such that copies of the DVD-video are obtained with the consequent economic damage that it represents for the author of the stored data and the industry legally recording and copying the data stored in the DVD-video.

It is therefore necessary to provide an improved anticopying protection process protecting the data stored in a DVD-video against the illegal copying thereof.

### Characterization of the Invention

The present invention is aimed at solving or reducing one or more of the drawbacks previously set forth by means of a data recording process as claimed in claim 1.

One object of the invention is to provide a data recording process in order to protect the stored data against illegally copying the data stored in a data storage medium such as a DVD-video.

Another object of the invention is that the provided anticopying recording process is low cost and simple to implement and carry out without needing to modify and/or substitute already installed manufacturing equipment.

Still another object of the invention is that the anticopying data recording process can coexist with other anticopying protection processes and/or systems currently known and included in the data which is stored in the data storage medium.

### Brief Description of the Drawings

A more detailed explanation of the invention is given in the following description based on the attached figures in which:
Figure 1 shows a VOB video object file according to the invention, and
Figure 2 shows two types of embossment of an added cell of the VOB video object file according to the invention.

### Description of the Invention

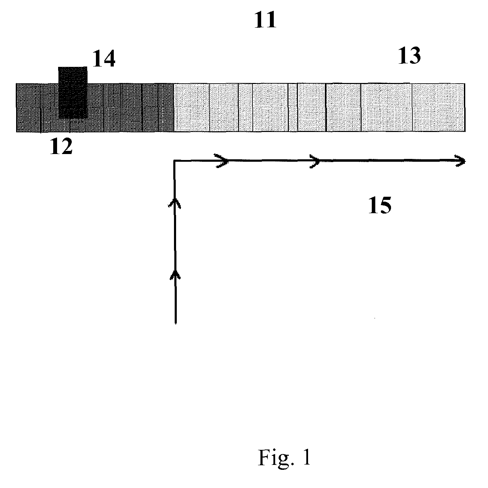

A file 11 of stored data or content, namely a VOB video object file stored in a data storage medium such as DVD-video, used to store a wide variety of digital data is shown below with reference to Figure 1.

A DVD-video comprises a set of sectors on which the data to be stored is recorded organized in a set of files including several types of files, each type of file is assigned a predetermined task.

The recording of the previously mentioned files on the DVD-video has an order and predefined structure which allows the playback of the data stored in the DVD-video by means of a reader 15.

The recording of the different types of files is carried out by means of a recording process by means of laser, known as a mastering process or a process for obtaining a first copy on glass.

The VOB video object file 11 type file includes the complete content of the video, the audio signal, the subtitles, etc. Said VOB file 11 is divided into a set of cells 12, 13 such that each cell is associated to an identifier or index identifying it within the video object file 11.

The playback order of the set of cells 12, 13 comprised in the DVD-video is stored in a predetermined file created during the programming process, namely an authoring process generating the set of control data included in the predetermined file, which is a typical file of those comprised in the set of typical files stored in the DVD-video.

When a playback order is executed, the program provides the sequence for accessing the indicators of the cells 12, 13 of the VOB video object file 11, i.e. the playback order thereof.

The anticopying protection process provides an extended video object file 11, i.e. the length of such file exceeds the length that a predetermined video object file 11 must have according to the data of the desired video that must be stored.

For example, the extended video file can have a length such that it can store the data of the video that must be stored and filler video data, such that the extended VOB video object file 11 has a greater length than a VOB video object file 11 containing only the desired video, as a result the extended video object file contains a greater number of cells 12, 13 than a VOB video object file 11 containing only the desired video.

Therefore the extended VOB video object file 11 comprises a predetermined number of cells 13 relating to the desired video and a predetermined number of additional cells 12 containing filler data.

By means of the authoring process the indicators of both types of cells 12, 13 are created, i.e. of the cells 13 which must be played back through a normal playback process and of the added cells 12, both types of cells 12, 13 being included in the extended VOB video object file 11.

The predetermined file 11 controlling the playback of the desired content of the DVD-video is also generated, such that the indicators relating to the added cells 12 are avoided during the normal playback process and yet during an illegal copying process, the mentioned file will direct the illegal copier to the added cell 12.

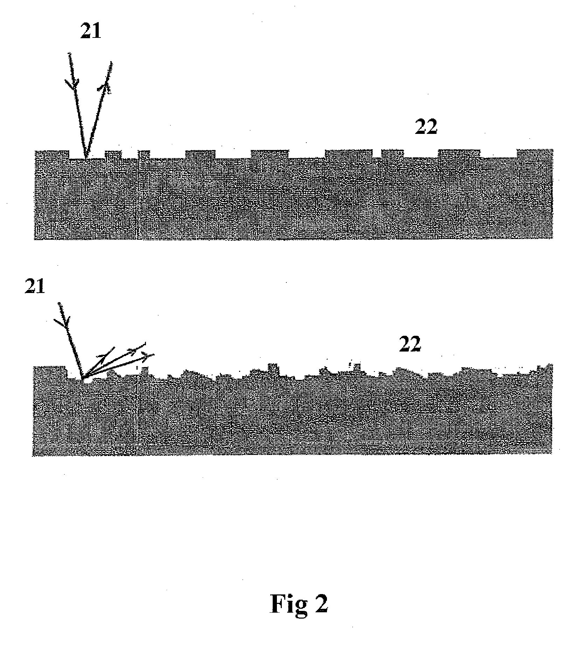

In relation now to Figures 1 and 2, the object of directing the illegal copier towards the added cell 12 is a consequence of the fact that a piece 14 of the content of the mentioned cell 12 is altered by means of overwriting by means of laser during the mastering process, such that the part 14 of altered data of the added cell 12 is altered such that the copier detects an sufficiently high error rate that leads him or her to the conclusion that the DVD-video is damaged and/or also that upon altering in an irregular manner the embossment 22 etched in the added cell 12, it has the result that the focus of the laser 21 of the reader is lost, i.e. a tracking loss is generated or a focusing loss occurs.

It must be observed that currently there are copying means which allow playing back the content of the DVD-video during the illegal copying process. According to the above, an operator of the illegal copying program starts viewing the video being copied and upon losing the images, reaffirms his or her idea that the DVD-video which he or she is attempting to copy is damaged.

The embodiments and examples provided in this specification are set forth as the best explanation of the present invention and its practical application and to thus allow persons skilled in the art to put the invention into practice and use it. Nevertheless, the persons skilled in the art will recognize that the previous description and the examples have been set forth for the purpose of illustrating and only as an example. The description as it is set forth is not intended to be exhaustive or to limit the invention to the precise form described. Many modifications and variations are possible in view of the previous teaching without departing from the essence and scope of the following claims.

## Claims

1. A recording process for recording data in a storage medium suitable for protecting against illegal copying; **characterized in that** it comprises the steps of:
- Recording data relating to a desired video on a storage medium such that a video object file (11) can be obtained,
- Distributing the data stored in the video object file (11) in at least one cell (13), and
- Adding at least one additional cell (12) to the cells (13) of stored data of the video object file (11) obtained such that the added cell (11) includes filler data.

2. A process according to claim 1; **characterized in that** it further comprises the step of generating at least one tag (14) by means of overwriting by means of a laser in a sector of the additional cell (12).

3. A process according to claim 2; **characterized in that** it further comprises the step of generating indicators of both types of cells (12, 13), cells (13) of the desired video and added cells (12), such that the desired video can be played back during a normal playback process.

4. A process according to claim 3; **characterized in that** it also comprises the step of storing the generated indicators in a file controlling the playback of the desired video.

5. An arrangement for storing the recorded video data; **characterized in that** the recorded video data is recorded according to the process according to any of the previous claims.

6. An arrangement according to claim 5; **characterized in that** the device is digital versatile disk, namely a DVD suitable for storing a wide variety of digital data types.

7. An arrangement according to claim 6; **characterized in that** the recorded video data comprises a video object file (11) including at least two types of cells, cells (13) of the desired video and added cells (12) comprising filler data.
